# EUROPEAN PATENT APPLICATION

(11) **EP 2 653 273 A1**
(43) Date of publication of application: **23.10.2013**
(21) Application number: 11849590.2
(22) Date of filing: 01.08.2011
(51) Int. Cl.: B25J 13/08, F03D 11/00, B25J 5/00

(54) **WIND TURBINE ASSEMBLY AND MANAGEMENT ROBOT AND WIND TURBINE SYSTEM INCLUDING SAME**

(30) Priority: 16.12.2010 KR 20100129034
(71) Applicant: Samsung Heavy Ind. Co., Ltd., Seoul 135-280 (KR)
(72) Inventor: PARK, Youngjun, Daejeon 305-761 (KR); Ha, YoungYoul, Seoul 135-080 (KR)
(74) Representative: Tischner, Oliver
(86) International application number: PCT/KR2011/005662
(87) International publication number: WO 2012/081793

(57) **Abstract**

There is provided a wind turbine assembly and management robot that performs wind turbine assembly and management by itself. A wind turbine assembly and management robot according to exemplary embodiments of the present invention comprises: a recognizing unit configured to recognize a 3D space in a wind turbine and acquire and transmit image information; a working unit configured to bolt tower section flange coupling portions; an operating unit configured to move bolts, nuts, and the working unit to the flange coupling portions and perform bolting; a moving unit configured to horizontally move along the flange coupling portions or configured to move by using a ladder or an elevator in the wind turbine; a control unit configured to control any one or more of the recognizing unit, the working unit, the operating unit, and the moving unit; and a communication unit configured to communicate with a remote control system.

## Description

### [Technical Field]

The present invention relates to a wind turbine assembly and management robot, which allows ease of assembly and management of a wind turbine, and a wind turbine system comprising the same.

### [Background Art]

A wind turbine is a machine converting power energy by wind power into mechanical energy. When the mechanical energy is used directly by machines such as those pumping water or operating a mill, the wind turbine can be considered as a windmill. Similarly, when the mechanical energy is converted into electricity, the machine can be considered as a wind generator or a wind power plant.

The tower of a wind turbine is large in size and there is a limit in terms of transportation in carrying such a large structure, such that it is impossible to assemble the entire tower before carrying it to the installation site. Accordingly, the tower is completed by carrying a plurality of tower sections manufactured in advance to an installation site and then assembling them.

However, since workers assemble the tower sections with heavy press-bolting equipment at a considerably high position when assembling the tower sections, not only work efficiency is low, but a problem in safety is caused. Further, it is required to frequently monitor and maintain the coupling portions to keep the coupling portions locked under predetermined torque after assembling and there is still a problem in safety even in this case.

The above information disclosed in this Background section is only for enhancement of understanding of the background of the invention and therefore it may contain information that does not form the prior art that is already known in this country to a person of ordinary skill in the art.

### [DISCLOSURE]

### [Technical Problem]

Exemplary embodiments of the present invention provide a wind turbine assembly and management robot which can safely and efficiently monitor and maintain a wind turbine.

Further, exemplary embodiments of the present invention provide a wind turbine system including the wind turbine assembly and management robot.

### [Technical Solution]

A wind turbine assembly and management robot according to an aspect of the present invention may comprises: a recognizing unit that recognizes a 3D space in a wind turbine and acquires and transmits image information; a working unit that bolts tower section flange coupling portions; an operating unit that moves bolts, nuts, and the working unit to the flange coupling portions and performs bolting; a moving unit that horizontally moves along the flange coupling portions or moves, using a ladder or an elevator in the wind turbine; a control unit that controls any one or more of the recognizing unit, the working unit, the operating unit, and the moving unit; and a communication unit that communicates with a remote control system.

A wind turbine system according to another aspect of the present invention may include a wind turbine, the wind turbine assembly and management robot, and a remote control system.

### [Advantageous Effects]

Since the wind turbine assembly and management robot according to exemplary embodiments of the present invention can assemble tower sections by itself, a problem in safety may not be generated in assembling the tower sections.

Further, since the robot periodically monitors and maintains a wind turbine, not only monitoring and maintenance are more accurate and easier in comparison with using human resources, but a problem in safety may not be generated.

Since a wind turbine system according to exemplary embodiments of the present invention also assembles and manages tower sections at a remote place, using the wind turbine assembly and management robot, it is possible to more accurately, easily, and safely manage a wind turbine.

### [Description of the Drawings]

FIG. 1 is a perspective view schematically showing a wind turbine system according to an exemplary embodiment of the present invention.
FIG. 2 is a diagram illustrating the components of a wind turbine assembly and management robot according to an exemplary embodiment of the present invention.
FIG. 3 is a perspective view schematically showing an exemplary embodiment of a recognizing unit of the wind turbine assembly and management robot according to an exemplary embodiment of the present invention.
FIG. 4 is a cross-sectional view showing exemplary embodiments of a working unit of the wind turbine assembly and management robot according to an exemplary embodiment of the present invention.
FIG. 5 is a view illustrating the operation method of an operating unit of the wind turbine assembly and management robot according to an exemplary embodiment of the present invention.
FIG. 6 is a schematic diagram showing exemplary embodiments of the operating unit of the wind turbine assembly and management robot according to an exemplary embodiment of the present invention.
FIGS. 7 to 9 are schematic diagrams showing various exemplary embodiments of a moving unit of the wind turbine assembly and management robot according to an exemplary embodiment of the present invention.
FIG. 10 is a schematic diagram showing the working and moving method of the wind turbine assembly and management robot according to an exemplary embodiment of the present invention.
FIG. 11 is a schematic diagram showing the configuration of a control unit of the wind turbine assembly and management robot according to an exemplary embodiment of the present invention.
FIG. 12 is a schematic diagram showing how to control the robot, when losing the position of the wind turbine assembly and management robot according to an exemplary embodiment of the present invention.
FIG. 13 is a conceptual view showing the work status of the wind turbine assembly and management robot according to an exemplary embodiment of the present invention.
FIG. 14 is a detailed conceptual view showing the status of a wind turbine assembly and management robot according to an exemplary embodiment of the present invention.

### [Best Mode for Invention]

An aspect of the present invention may provide a wind turbine assembly and management robot which includes a recognizing unit that recognizes a 3D space and acquires and transmits image information, a working unit that bolts tower section flange coupling portions, an operating unit that moves bolts, nuts, and the working unit and bolts them, a moving unit that moves horizontally along the flange coupling portions or moves using a ladder or an elevator in the wind turbine, a control unit that controls the recognizing unit, the operating unit, and the moving unit, and a communication unit that communicates with a remote control system.

The operating unit may be attached/detached to/from the working unit or the moving unit.

The operating unit may include a manipulator and a coupling portion that can be attached/detached to/from the working unit or the moving unit.

The coupling portion may include a gripper and a coupling unit that can be attached/detached to/from the gripper and receive and fix the working unit or the moving unit.

The manipulator is a manipulator with six or more degrees of freedom and the operating unit may include at least two or more pieces of the manipulators.

The recognizing unit may include a manipulator, a camera, and a sensor.

The working unit may be a nut driver or a welding driver.

The moving unit may include at least one selected from a moving member that can move along a ladder rail or a balustrade, a moving member that can move the flange coupling portions to a guide rail, and a moving member that can get in/out of the elevator.

The control unit may include a storage that stores internal/external turbine design values and robot design values, a 3D space model generator that generates 3D space model measurement values, using recognized values of the recognizing unit, a robot locater that calculates the current position values of the robot by comparing the design values with the measured values, and a robot processor that moves the robot to perform desired work on the basis of the current position values.

When the robot locater determines that the position is lost, the robot processor acquires a re-recognition value by increasing the amount of recognition of the recognizing unit, the robot locater determines the current position on the basis of the re-recognition value, and the robot processor can return the current status of the robot to the previous status.

Another aspect of the present invention may include a wind turbine, the wind turbine assembly and management robot, and a remote control system.

The details of other exemplary embodiments are included in the exemplary embodiment of the present invention and corresponding drawings.

### [Detailed Description of the Embodiments]

The advantages and features of the present invention and a method of achieving them will be clear by referring to the exemplary embodiments described below in detail with reference to the accompanying drawings. However, the present invention is not limited to the exemplary embodiments described below and achieved in various ways, the exemplary embodiments are provided to complete the present invention and make the scope of the present invention clear to those skilled in the art, and the present invention is defined only by the range described in claims. Therefore, well-known technologies will not be described in detail in some exemplary embodiments in order to avoid unclear construction of the present invention.

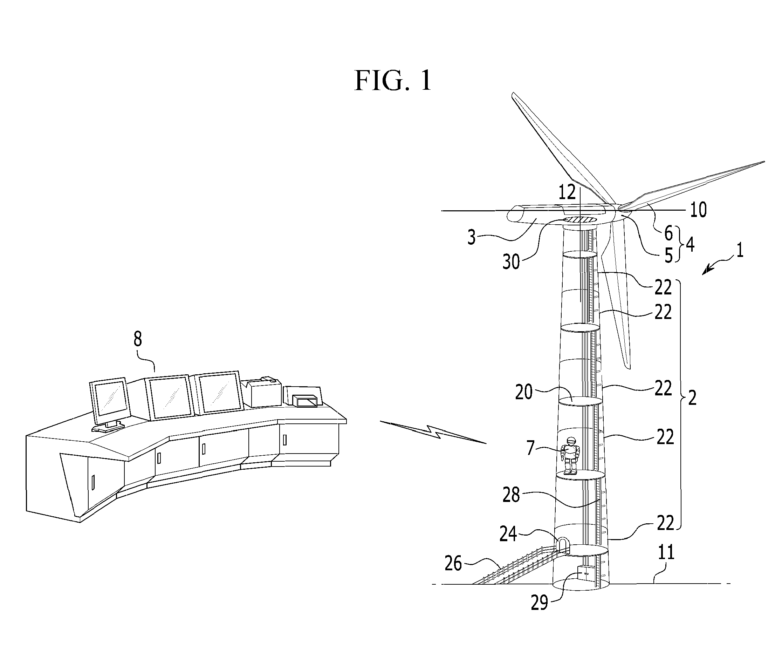

FIG. 1 is a perspective view schematically showing a wind turbine system according to an exemplary embodiment of the present invention. Referring to FIG. 1, a wind turbine system includes a wind turbine 1 and a remote control system 8. The wind turbine 1 includes a tower 2, a nacelle 3 mounted on the tower 2, a rotor 4 fitted on the nacelle 3, and a wind turbine assembly and management robot 7. The wind turbine assembly and management robot 7 and the remote control system 8 are implemented such that wireless communication is possible.

In FIG. 1, the rotor 4 is composed of a spinner 5 covering a rotor hub (not shown) and rotor blades 6 mounted on the rotor hub. Although three rotor blades 6 are exemplified in the figure, three or more or less rotor blades 6 may be included. The rotor blades 6 convert kinetic energy from wind into mechanical energy, and finally into electric energy by easily rotating the rotor 4. In more detail, when wind hits against the rotor blades 6, the rotor 4 rotates about a rotary shaft 10 and converts the kinetic energy from the wind into mechanical energy. Since the wind easily changes in direction, control is needed to make the rotor blades 6 substantially confront the wind. In other words, it is possible to maximize the amount of wind hitting against the rotor blades 6 by turning the nacelle 3 so that the wind direction is substantially parallel with the rotary shaft 10, or so that the rotor blades 6 are perpendicular to their longitudinal axis 12, in the same way or separately, that is to the rotary shaft 10 of the rotor 4 and are pitched around the rotational axis 12 that is substantially the same axis as the longitudinal axis of the tower 2.

The nacelle 3 receives a power generator and related components. Therefore, the mechanical energy transmitted by the rotor 4 is converted into electric energy by the power generator (not shown). The nacelle 3 receives the power generator and related components and includes a platform 3 for providing a space so that a worker or the robot 7 can stand while performing various items of work of installation, assembly, and maintenance (hereafter, assembly and management work).

The tower 2 can be manufactured generally by stacking and assembling a plurality of closed ring type of tower sections 22 formed by rolling arc steel plates and then fixing the ends of the steel plates. The tower 2 includes an entrance 24 for access into the tower 2 from the ground 11. It is possible to move from the ground 11 to the entrance 24, using an external ladder 26. An internal ladder 28 and an elevator 29 may be installed in the tower 2 so that a worker or the robot 7 moves while performing the assembly and management work on the wind turbine 1. Further, similar to the nacelle 3, a plurality of platforms 20 may be disposed in the tower 2 to provide spaces so that a worker can stand while performing various items of assembly and management work.

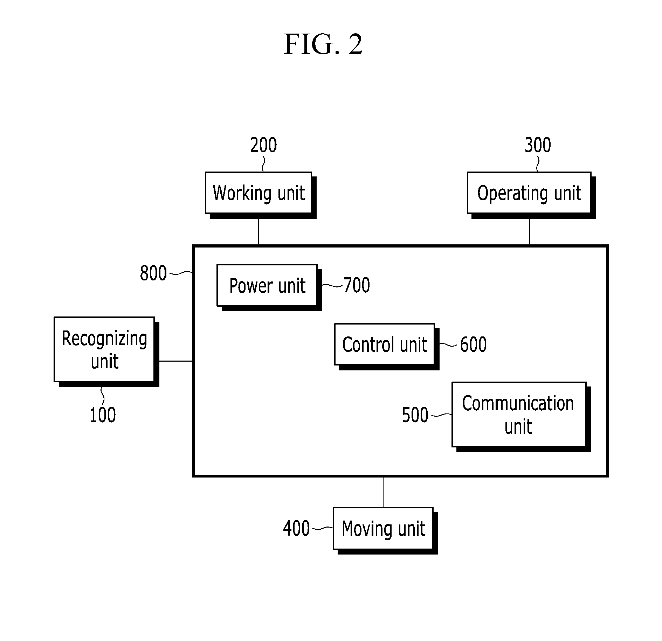

FIG. 2 is a diagram illustrating the components of the wind turbine management robot 7 according to an exemplary embodiment of the present invention.

The wind turbine assembly and management robot 7 according to an exemplary embodiment of the present invention includes a recognizing unit 100, a working unit 200, an operating unit 300, a moving unit 400, a communication unit 500, a control unit 600, and a power unit 700.

The recognizing unit 100 recognizes a 3D space and supports movement from the current position to a target position along a movement path. The result of the recognizing unit 100 is available for generating a movement path and an operation path of the management robot 7. Further, the recognizing unit 100 is available for monitoring the status in the wind turbine 1 too. Acquiring image information for visually checking whether bolts are fastened or loosened and transmitting the information to the remote control system 8 through the communication unit 500 may be included, as an example of monitoring the internal status.

The working unit 200 is a tool for performing predetermined work on a work target. For example, it may be a tool for fastening bolts and nuts.

The operating unit 300 serves to move or fix bolts, nuts, or the operating unit 200 to a desired place.

The operating unit 400 is a part making the management robot 7 a mobile robot 7. The moving unit 400 receives power from the power unit 700 and enables the robot 7 to move from the initial position to a desired position under the control of the control unit 600.

The communication unit 500 allows wire/wireless communication with the remote control system 8 or wireless communication with a wireless communication unit of the elevator 29.

The control unit 600 automatically controls the components of the recognizing unit 100, the working unit 200, the operating unit 300, the moving unit 400, and the communication unit 500, or controls the robot 7 in accordance with instructions from the remote control system 8.

The power unit 700 is a part that supplies power to the components of the recognizing unit 100, the working unit 200, the operating unit 300, the moving unit 400, the communication unit 500, and the control unit 600. The power unit 700 can be charged by a socket in the wind turbine 1.

The communication unit 600, control unit 600, and power unit 700 may be disposed in a body 800 of the robot 7 and not seen from the outside. Further, the working unit 200 and the moving unit 400 may be received in the body 800 and combined with the operating unit 300 for use, if necessary.

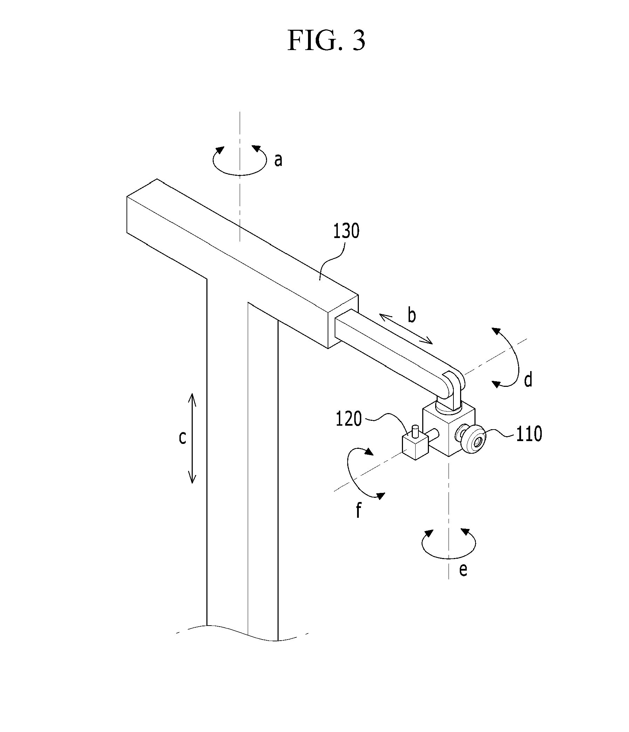

FIG. 3 is a schematic perspective view showing an exemplary embodiment of the recognizing unit 100.

The recognizing unit 100 may include a camera 110, a sensor 120, and a manipulator 130. The camera 110 may be used to monitor the situation in the tower 1 and transmit 3D image information to the remote control system 8. The sensor 120 may include a torque sensor. The torque sensor may be used to measure whether bolting for assembling the tower sections 22 is performed with constant torque. Other than the torque sensor, the sensor 120 may further include a pressure sensor, a position sensor, an optical sensor, and an infrared sensor. The pressure sensor may also be used to measure whether constant pressure is applied when pressure is applied in bolting. As the position sensor, a potentiometer, an encoder, a linear variable differential transformer, and a resolver may be used and measure motion and movement of the robot 7. The optical sensor or the infrared sensor may be used to determine whether the robot 7 approaches before acquiring the information on the environment and coming in contact with another object. The manipulator 130 may be provided to recognize a desired space in the tower 1 in a desired posture. Therefore, it is preferable that the manipulator 130 is a manipulator having six or more degrees of freedom. Three degrees of freedom are rotational movement (a), radial movement (b), and a vertical movement (c). The other three degrees of freedom are pitch (d), yaw (e), and roll (f). The specific manipulator 130 may not be provided in accordance with the way of implementing the robot 7.

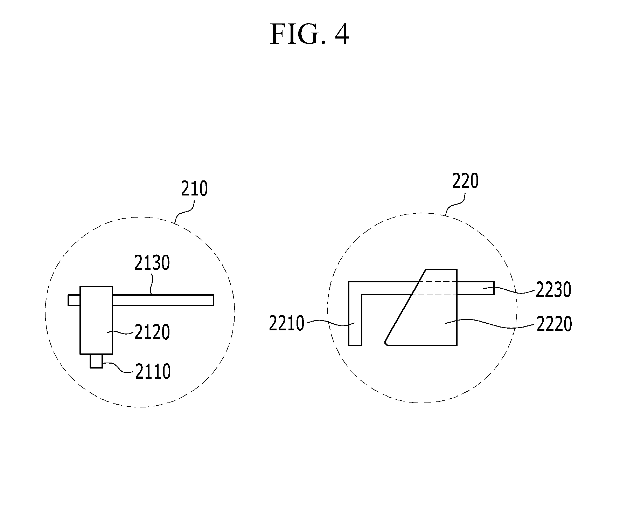

FIG. 4 is a cross-sectional view showing exemplary embodiments of the working unit 200.

The working unit 200 is a tool for performing predetermined work on a work target. The types of work may be classified into when a large force is not needed but the rotation speed should be high and when the rotation speed is not high but a large force is needed. For example, the working unit 200 may be a nut driver 210 used for bolting the tower sections 22 or a welding driver 220. It is preferable that the nut driver 210 has at least two or more degrees of freedom. One degree of freedom may be used to pull bolts and the other degree of freedom may be used to turn nuts. Referring to FIG. 4, the nut driver 210 or the welding driver 220 has a head 2110 and 2210 that can be fastened, rotated, or can weld in contact with a work target, a body 2120 and 2220 that transmits a driving force to the head 2110 and 2210 and forms the external appearance, and a driving unit 2130 and 2230 that generates a driving force to the head 2110 and 2210. However, the present invention is not limited thereto and the working unit 200 may include various tools in accordance with the types of work, bolts, and nuts. Therefore, it is preferable that the working unit 200 moves with the robot 7 detachably mounted. For example, the working unit 200 can be received in the robot body 800 in moving and then combined with the working unit 300 to perform work in bolting.

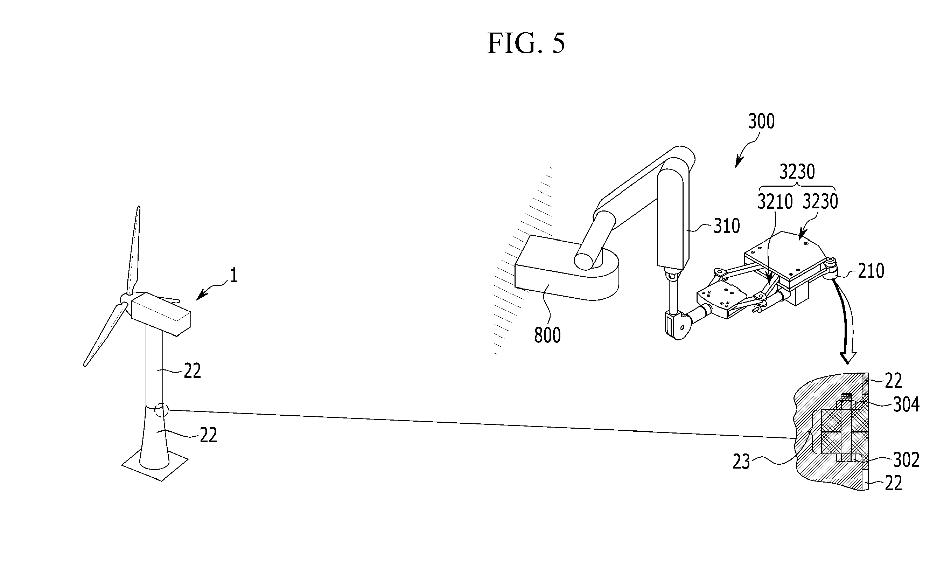

FIG. 5 is a view showing the operation method of the operating unit 300. The operating unit 300 moves a bolt 302 and a nut 304 to the flange coupling portion 23 and then performs bolting with the nut driver 210, which is an example of the working unit 200. Therefore, it is preferable that the operating unit 300 is implemented by two or more manipulators 310 with three or more degrees of freedom, more preferably, six or more degrees of freedom. The operating unit 300 is required to control both of a position and a force.

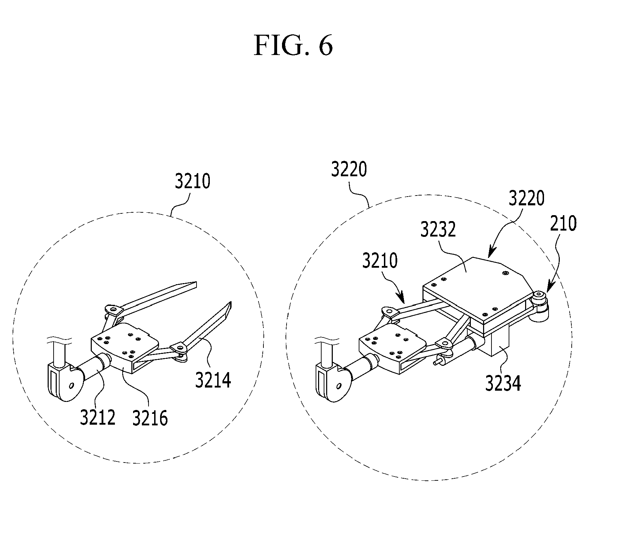

As shown in FIG. 6, the operating unit 300 may further have a coupler 320 that can be attached/detached to/from the working unit 200. The coupler 320 is a part for gripping of a work target such as a bolt or a nut, or for gripping and releasing the working unit 200 for work such as fastening or loosening a bolt.

The coupler 320 can be attached/detached to/from the moving unit 400 too, which is described below.

The coupler 320 may be implemented in the type of a first coupling mechanism 3210 or a second coupling mechanism 3220. The first coupling mechanism 3210 may be implemented in the type of a griper including a connecting portion 3212 connected to the manipulator 310 and a supporting portion 3216 supporting a finger 3214. The finger 3214 can rotate and move and can perform gripping, such that it can hold and rotate/move a work object (a bolt, a nut, or the working unit 200), and then place it to a desired position. For example, the finger 3214 is provided in a pair, such that they perform gripping by moving close to each other and perform releasing by moving away from each other. The supporting portion 3216 functions as a hinge shaft allowing the gripping of the fingers 3214 and combines the fingers 3214 with the connecting portion 3212. The connecting portion 3212 can be attached/detached to the manipulator 310.

The second coupling mechanism 3220 may be implemented by combination of the first coupling mechanism 3210 and a coupling unit 3230. A fixing force is not a matter, when the first coupling mechanism 3210 grips a bolt or a nut, but when it rotates with the working unit 200 for tightening a bolt and a nut held, the working unit 200 may be separated from the first coupling mechanism 3210. Therefore, it may further include a coupling unit 3230 for more firm and stable coupling to the working unit 200 and making the operation of the working unit 200 more smooth. The shape of the coupling unit 3230 may change in various ways in accordance with the shape of the working unit 200. For example, the coupling unit 3230 can be attached/detached by gripping and releasing of the gripper type of first coupling mechanism 3210. The coupling unit 3230 forms a space for receiving the first coupling mechanism 3210 and may be composed of a fixed portion 3232 fixed to the first coupling mechanism 3210 and a coupler 3234 coupled to the working unit 200. The coupler 3234 has a shape that can receive and fix the working unit 200. The coupling unit 3230 is formed such that the first coupling mechanism 3210 can be inserted/separated in/from the coupling unit 3230 in gripping status. For example, the coupling unit 3230 may have an opening that can come in contact with the coupling unit 3230 under pressure when the first coupling mechanism 3210 is released, and that can freely attached/detached to/from the coupling unit 3230 in the gripping status of the first coupling mechanism 3210. Further, the fixed portion 3232 may have a hollow pipe shape with a polygonal cross-section that can receive the first coupling mechanism 3210. That is, the first coupling mechanism 3210 can be separated and mounted by sliding into the fixed portion 3232. The operating unit 300 may perform the function of the moving unit 400 too in corporation with the moving unit 400.

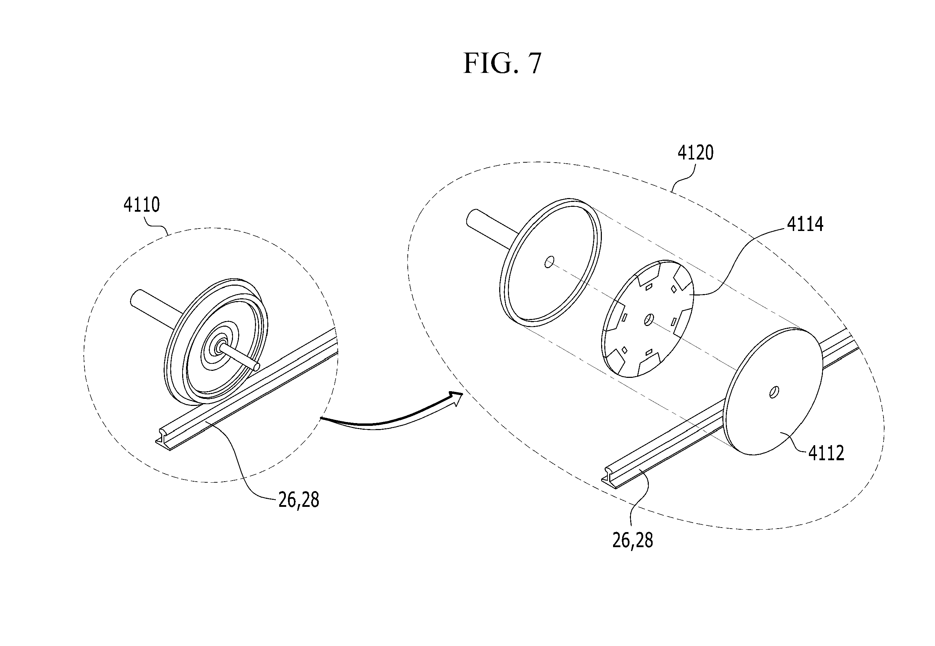

FIGS. 7 to 9 are schematic diagrams showing various exemplary embodiments of the moving unit 400.

The moving unit 400, which means a mechanism moving the robot 7, may be a wheel or a humanoid leg.

The robot 7 moving in the tower 1 may move in the order of the tower external ladder 26 <-> the tower platform 20 <-> the internal ladder 28 or the elevator 29 <-> the nacelle platform 20 <-> the rotor 4.

Therefore, the moving unit 400, as exemplified in FIG. 7, may include a first moving member that can move along the rail or the banister of the external ladder 26 or the internal ladder 28. The first moving member may be implemented as a metal wheel 4110 such as the wheel of a train or a composite wheel 4120 formed by inserting an electromagnetic wheel 4114 in a plastic wheel 4112. For the composite wheel 4120, it is possible to control the magnitude of a magnetic force applied to the electromagnetic wheel 4114 so that the wheel can smoothly rotate along the ladders 26 and 28, by means of the control unit 600.

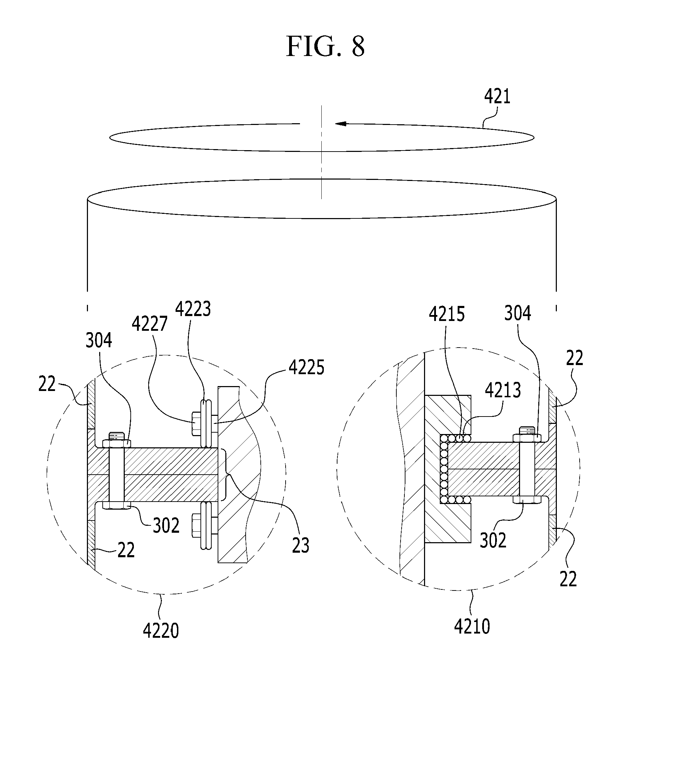

Further, as exemplified in FIG. 8, the moving unit 400 may include a second moving member that can make horizontal movement 421 along a ring formed by two flange coupling portions 23 engaged with each other when two tower sections 22 are assembled. The second moving member may be implemented as a first slider 4210 or a second slider 4220 that uses the flange coupling portion 23 as a guide rail. The inner side of the first slider 4210 is formed to correspond to the shape of the flange coupling portion 23. Further, an oblong groove 4213 is formed on the inner side of the first slider 4210 to engage with the flange coupling portion 23 and a plurality of balls 4215 are inserted in the oblong groove 4213 so that the first slider 4210 easily moves along the flange coupling portion 23. The second slider 4220 may include a pair of rotary bearings 4223 rotating along the upper and lower sides of the flange coupling portion 23 and a hollow shaft 4225 inserted through the centers of the rotary bearings 4223. A nut 4227 may be fixed to one end of the hollow shaft 4225.

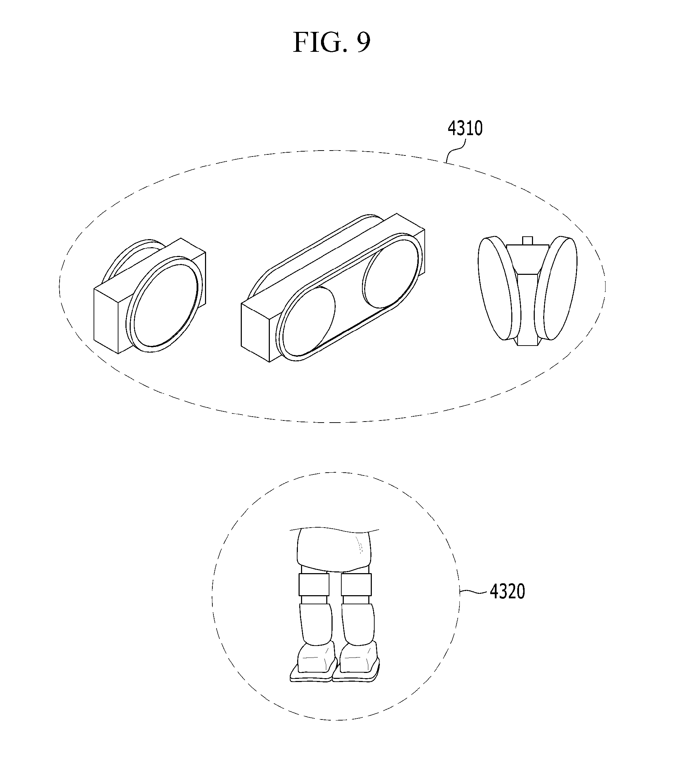

Further, as exemplified in FIG. 9, the moving unit 400 may include a third moving member that can move using the platforms 20 and 30 or the elevator 29. The third moving member may be a moving member such as a common wheel 4310 or leg 4320.

Meanwhile, when the moving unit moves using the elevator 29, the elevator may further include a wireless communication unit that allows a call through wireless communication of the communication unit 500. Therefore, the communication unit 500 and the wireless communication unit of the elevator 29 may include a Zigbee or Bluetooth type of wireless communication module, or may include other types of wireless communication module. The communication unit 500 can transmit a signal for controlling the elevator 29 to the elevator 29 through the control unit 600. The control unit 600 can control the robot 7 to get in/out of the elevator 29, when the door of the elevator 29 opens. The control unit 600 may be implemented to determine whether the door of the elevator 29 opens/closes through the recognizing unit 100 or to receive the information on the current position and opening/closing of the door of the elevator 29, from the elevator 29 through the communication unit 500.

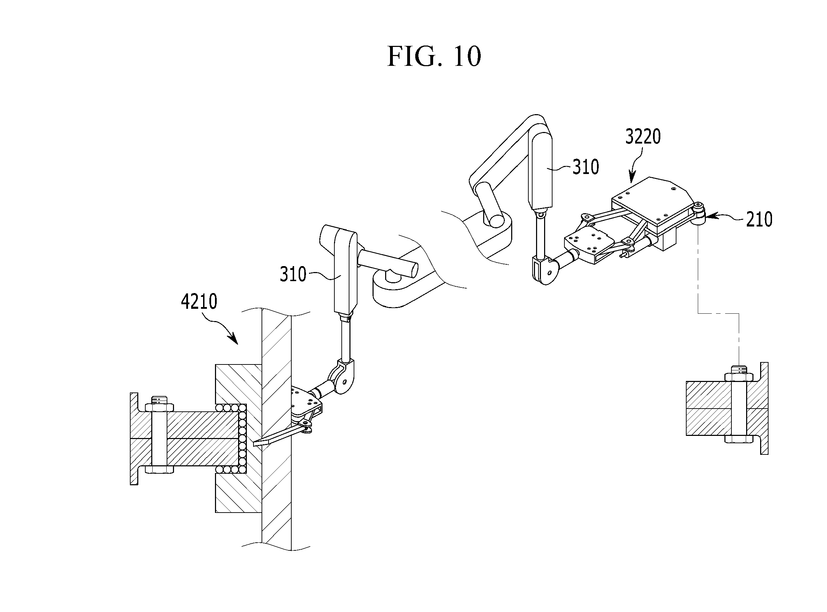

The moving unit 400 may keep connected to the robot body 800 or, as exemplified in FIG. 10, it may be received in the robot body 800 and combined with the operating unit 300. Referring to FIG. 10, the nut drive 210 is combined with the second coupling mechanism 3220 of the manipulator 310 of the operating unit 300 and performs bolting, and the first slider 4210 can be combined with the other manipulator 310 and perform moving.

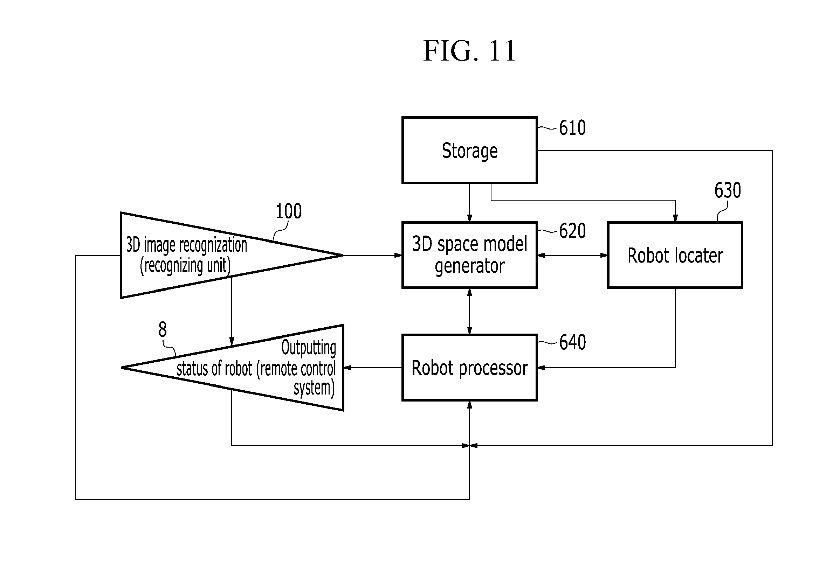

FIG. 11 is a schematic diagram showing the configuration of the control unit 600.

The control unit 600 may include a storage 610 storing a 3D design drawing of the wind turbine 1, a 3D space model generator 620, a robot locater 630, and a robot processor 640.

The storage 610 stores internal/external 3D space model design values of the wind turbine 1 and design values of the robot 7 that are determined in designing the robot 7, such as the weight, dimensions, and maximum output of the robot.

The 3D space model generator 620 receives a stereo image and a point cloud that are 3D image recognition values recognized by the recognizing unit 100. The 3D space model generator 620 acquires 3D space model measurement values of the robot 7, using the recognition values of the recognizing unit 100.

The robot locater 630 can calculate the current 3D position values of the robot 7 by comparing the stored values stored in the storage 610 with the measurement values of the 3D space model generator 620.

The robot processor 640 automatically controls the components of the recognizing unit 100, the working unit 200, the operating unit 300, the moving unit 400, and the communication unit 500 so that the robot 7 can move to a desired position and perform desired work, on the basis of the current position values of the robot locater 630. Meanwhile, the robot processor 640 controls the robot 7 in accordance with an instruction inputted from the remote control system 8 and outputs and transmits the current status and the result of work of the robot 7 to the remote control system 8. The robot processor 640 controls the robot 7, using the design values of the robot 7 stored in the storage 610, and measurement values such as the acceleration and angular acceleration of a specific portion of the robot 7 measured by the sensor 110 of the recognizing unit 10, and motor output.

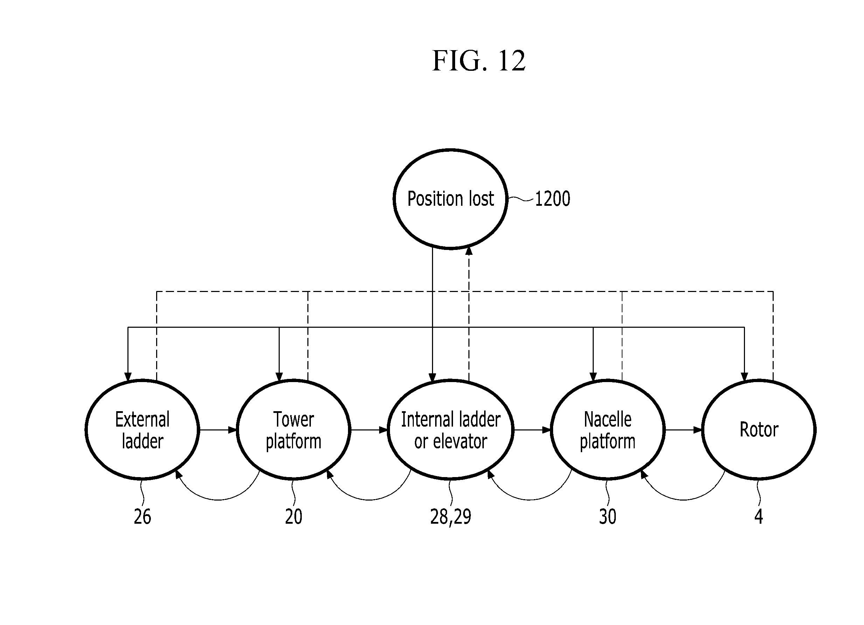

Meanwhile, the robot processor 640 may determine that it is a position loss status 1200, due to various reasons. How to control the robot 7 in this case is exemplified in FIG. 12. Referring to FIG. 12, the status when the robot processor 640 cannot estimate the current position of the robot 7 is the position loss status 1200. Temporary position loss may be generated while the robot 7 moves, due to various reasons. In this case, the robot processor 640 makes the robot 7 stop and makes the recognizing unit 100 recognize again the current position by increasing the amount of recognition. When the robot locater 630 finds the current position on the basis of the re-recognition value, the robot processor 640 makes the robot continue the work. For example, the robot processor 640 can make the robot move to the previous status from the current status and continue the work on the basis of the position status map in FIG. 12. It may be preferable to move the robot to the previous status and make the robot continue the work in order to supplement incompletion of the work due to position loss.

The robot 7 may move in the order of the tower external ladder 26 <-> the tower platform 20 <-> the ladder 28 or the elevator 29 <-> the nacelle platform 20 <-> the rotor 4. For example, when the position loss status 1200 is determined, a robot position recognizer 530 recognizes the current position again. As a result, when it is determined that the current position is at the ladder 28 or the elevator 29, the robot 7 moves to the tower platform 20, which is the previous status, and continues the work.

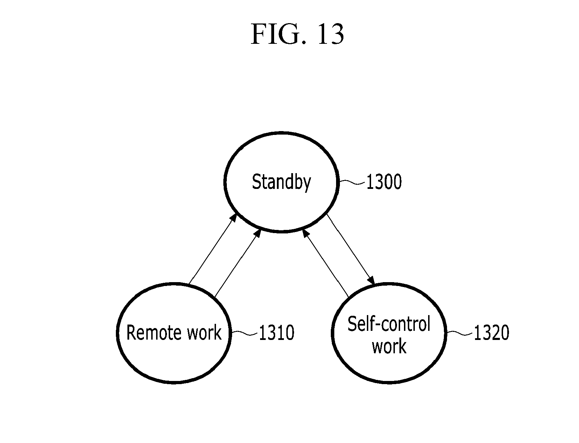

FIG. 13 is a conceptual view showing a work status of the robot. The basic status of the robot is a standby status 1300 and two work statuses of remote control 1310 and self-control work 1320 are possible.

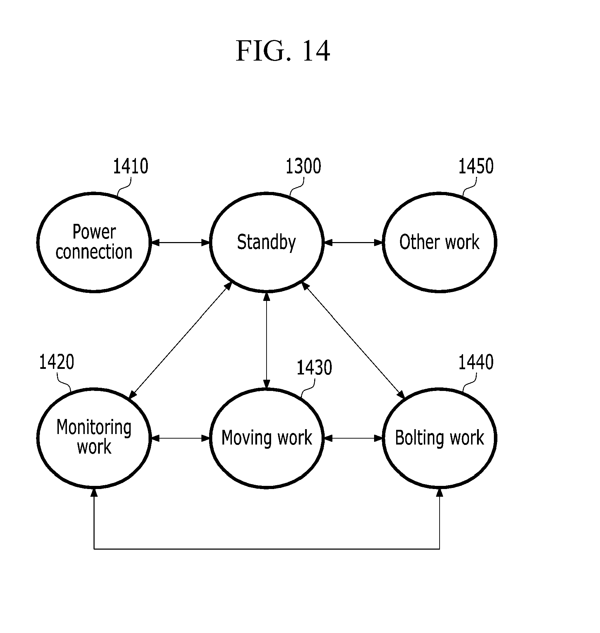

FIG. 14 shows an exemplary detailed conceptual view of the robot status in the self-control work 1320. As the types of the self-control work 1320, there may be power connection work 1410, monitoring work 1420, moving work 1430, bolting work 1440, and other work 1450. It may be impossible to perform the power connection work 1410, only using the energy charged in the robot 7, for work requiring large force or torque such as bolting. Energy for work can be used, in addition to charging, by connecting the robot 7 to a socket in the wind turbine 1. The monitoring work 1420, work that periodically monitors the situation of the wind turbine 1, allows periodic monitoring by recognizing high-resolution images of various main places, that is, monitored places and then transmitting the images to a remote place. The bolting work 1440 moves to a position where bolting is required, and then performs bolting work, or when bolting has been finished, it checks whether bolting is unfastened and then performs re-fastening when bolting is unfastened. The other work 1450 may be transmitted in the type of program to the robot 7 and any self-control work, which can be performed by the robot 7 other than the power connection work 1410, the monitoring work 1420, the moving work 1430, and the bolting work 1440, can be applied.

The drawings referred above and the detailed description of the present invention, provided as examples of the present invention, are used to explain the present invention, not limit meanings or the scope of the present invention described in claims. Therefore, those skilled in the art should understand that various modifications and other equivalent exemplary embodiments can be possible. Therefore, the actual technical protection scope of the present invention should be determined by the spirit described in claims.

### [Industrial Applicability]

The wind turbine assembly and management robot according to an exemplary embodiment of the present invention can be applied to a windmill, a wind turbine tower, a wind generator, or a wind power plant which can be equipped with a wind turbine.

Further, the wind turbine system according to an exemplary embodiment of the present invention can be applied to a control system that can remotely control a windmill, a wind turbine tower, a wind generator, or a wind power plant.

In detail, the wind turbine assembly and management robot of the present invention and a wind turbine system including the same can be used for preparation for installation before a wind turbine is installed, or used in maintenance and monitoring after the installation.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A wind turbine assembly and management robot, comprising:
a recognizing unit configured to recognize a 3D space in a wind turbine and acquire and transmit image information;
a working unit configured to bolt tower section flange coupling portions;
an operating unit configured to move bolts, nuts, and the working unit to the flange coupling portions and perform bolting;
a moving unit configured to horizontally move along the flange coupling portions or configured to move by using a ladder or an elevator in the wind turbine;
a control unit configured to control any one or more of the recognizing unit, the working unit, the operating unit, and the moving unit; and
a communication unit configured to communicate with a remote control system.

2. The robot of claim 1, wherein the operating unit is attachable/detachable to/from the working unit or the moving unit.

3. The robot of claim 2, wherein the operating unit includes a manipulator and a coupler attachable/detachable to/from the working unit or the moving unit.

4. The robot of claim 3, wherein the coupler includes a gripper and a coupling unit configured to be attachable/detachable to/from the gripper and receive and fix the working unit or the operating unit.

5. The robot of claim 3, wherein the manipulator has six or more degrees of freedom and the operating unit includes at least two or more pieces of the manipulator.

6. The robot of claim 1, wherein the recognizing unit includes a manipulator, a camera, and a sensor.

7. The robot of claim 1, wherein the working unit is a nut driver or a welding driver.

8. The robot of claim 1, wherein the moving unit includes at least one selected from a moving member that can move along a ladder rail or a balustrade, a moving member that can use the flange coupling portions as a guide rail, and a moving member that can get in/out of the elevator.

9. The robot of claim 1, wherein the control unit includes a storage configured to store internal/external turbine design values and robot design values, a 3D space model generator configured to generate 3D space model measurement values by using recognized values of the recognizing unit, a robot locater configured to calculate the current position values of the robot by comparing the design values with the measured values, and a robot processor configured to move the robot based on the current position values so as to perform desired work.

10. The robot of claim 9, wherein when the robot locater determines that the position is lost, the robot processor acquires a re-recognition value by increasing the amount of recognition of the recognizing unit, the robot locater determines the current position on the basis of the re-recognition value, and the robot processor returns the current status of the robot to the previous status.

11. A wind turbine system comprising:
a wind turbine;
a wind turbine assembly and management robot including: a recognizing unit configured to recognize a 3D space in a wind turbine and acquire and transmit image information; a working unit configured to bolt tower section flange coupling portions; an operating unit configured to move bolts, nuts, and the working unit to the flange coupling portions and perform bolting; a moving unit configured to horizontally move along the flange coupling portions or configured to move by using a ladder or an elevator in the wind turbine; a control unit configured to control any one or more of the recognizing unit, the working unit, the operating unit, and the moving unit; and a communication unit configured to communicate with a remote control system; and
a remote control system.

12. The system of claim 11, wherein the operating unit is attachable/detachable to/from the working unit or the moving unit.

13. The system of claim 12, wherein the operating unit includes a manipulator and a coupler attachable/detachable to/from the working unit or the moving unit.

14. The system of claim 13, wherein the coupler includes a gripper and a coupling unit configured to be attachable/detachable to/from the gripper and receive and fix the working unit or the operating unit.

15. The system of claim 13, wherein wherein the manipulator has six or more degrees of freedom and the operating unit includes at least two or more pieces of the manipulator.

16. The system of claim 11, wherein the recognizing unit includes a manipulator, a camera, and a sensor.

17. The system of claim 11, wherein the working unit is a nut driver or a welding driver.

18. The system of claim 11, wherein the moving unit includes at least one selected from a moving member that can move along a ladder rail or a balustrade, a moving member that can use the flange coupling portions as a guide rail, and a moving member that can get in/out of the elevator.

19. The system of claim 11, wherein the control unit includes a storage configured to store internal/external turbine design values and robot design values, a 3D space model generator configured to generate 3D space model measurement values by using recognized values of the recognizing unit, a robot locater configured to calculate the current position values of the robot by comparing the design values with the measured values, and a robot processor configured to move the robot based on the current position values so as to perform desired work.

20. The system of claim 19, wherein when the robot locater determines that the position is lost, the robot processor acquires a re-recognition value by increasing the amount of recognition of the recognizing unit, the robot locater determines the current position on the basis of the re-recognition value, and the robot processor returns the current status of the robot to the previous status.
